# EUROPEAN PATENT APPLICATION

(11) **EP 4 706 462 A1**
(43) Date of publication of application: **11.03.2026**
(21) Application number: 24199198.3
(22) Date of filing: 09.09.2024
(51) Int. Cl.: A47J 31/40, A47J 31/44, A47J 43/044, A47J 43/046, A23P 30/40

(54) **MILK FROTH FLAVORING DEVICE, MILK FROTHING ASSEMBLY AND METHOD**

(71) Applicant: Versuni Holding B.V., 1082 MD Amsterdam (NL)
(72) Inventor: VEENING, Christiaan Caspar Eduard, 1082 MD Amsterdam (NL)
(74) Representative: Vollering, Stefanus Franciscus Maria

(57) **Abstract**

Provided is a milk froth flavoring device (10), and a related method, for flavoring milk froth. The invention further relates to a milk frothing assembly (10, 100) comprising the milk froth flavoring device and a milk frother (100). The milk frother is configured to mix gas(es), that is/are odorized by a flavoring included in the milk froth flavoring device, with milk to generate milk froth in which bubbles of the odorized gas(es) are suspended in the milk.

## Description

### FIELD OF THE INVENTION

The invention relates to a milk froth flavoring device, and a related method, for flavoring milk froth. The invention further relates to a milk frothing assembly comprising the milk froth flavoring device and a milk frother. The milk frother is for mixing gas(es) with milk to generate milk froth, e.g. pourable and/or scoopable milk froth, in which bubbles of the gas(es) are suspended in the milk.

### BACKGROUND OF THE INVENTION

Various types of milk frothers are known, which milk frothers mix gases, e.g. air and/or steam, with milk to generate froth.

A milk frother is a device which changes the texture of milk, by introducing bubbles, typically via an aeration process, into the milk. The bubbles introduced into the milk may create a foam-like texture.

Some milk frothers work with a steam jet that is forced through a Venturi restriction. This results in a local pressure drop just downstream of the restriction. This pressure drop causes air to be drawn into, and mixed with, the milk. The resulting frothed milk may have relatively small bubbles and can be relatively easily poured. This, in the context of milk, may be referred to as "barista foam." Whilst milk frothed in this way can be desirable, e.g. for certain types of beverage, such as lattes and hot chocolate, the use of steam to froth the milk may place certain limitations on characteristics of the frothed milk. For example, the process inherently provides hot frothed milk.

Other milk frothers make use of an agitator that introduces bubbles into the milk to be frothed via agitation of the milk, e.g. using a whisking-type action. The milk may, for example, be heated at the same time as being agitated, or cold froth can be prepared by refraining from heating the milk during agitation. Frothing milk in this way tends to afford a relatively thick, scoopable, foam that may be less easy to pour than the above-mentioned "barista foam."

Currently available coffee machines are regularly filled with dark roasted beans, with which dark roasted beans all fine tastes may be removed when compared to lighter roasted fresh coffee beans. Consumers may desire the latter out of a general desire for an enhanced taste experience. Also, consumers may be interested in beverages that offer zero calorie intake, while still providing sweet/aromatic flavors.

### SUMMARY OF THE INVENTION

The invention is defined by the claims.

According to examples in accordance with an aspect of the invention, there is provided a milk froth flavoring device for connecting to a milk frother, the milk frother being for mixing gas(es) with milk to generate milk froth in which bubbles of the gas(es) are suspended in the milk, wherein the milk froth flavoring device comprises: a flavoring for odorizing the gas(es); a container for containing the flavoring; and a connection interface for permitting the container to be fluidly connected to the milk frother to enable the flavoring to odorize the gas(es) in the bubbles suspended in the milk.

By odorizing the gas(es) combined with the milk in this manner, bubbles in the milk froth can release aroma, e.g. slowly release aroma over time, to enhance the sensory experience of the consumer of the froth.

About 80% of flavors may be detected by olfactory nerves. Adding a flavoring that odorizes the gas bubbles in order to trigger those nerves can assist to steer the taste of a beverage, e.g. a coffee beverage, comprising the milk froth.

The present disclosure can accordingly be regarded as providing a way of adding flavoring, e.g. aromatics, to a beverage by capturing aroma in gas form in the milk froth, e.g. pourable and/or scoopable milk froth, included in the beverage.

It is noted that not all flavorings have odorizing capability. For example, some sweeteners, such as aspartame, provide a sweet taste but are odorless. The term "flavoring" as used herein refers to a substance that imparts an odor to the gas(es) that is/are combined with the milk to generate the milk froth, but which optionally may additionally impart a taste to the froth.

In some embodiments, the flavoring imparts the odor to the gas(es) without increasing the calorie content of the milk froth, compared to the milk froth provided by gas(es) not odorized by the flavoring.

The flavoring can take any suitable form provided that the flavoring is capable of odorizing the gas(es) that is/are combined with the milk to generate the milk froth, e.g. pourable and/or scoopable milk froth. In some embodiments, the flavoring is contained in the container in gaseous form. Alternatively, the flavoring may be contained in the container as a liquid, but with the liquid being vaporizable to odorize the gas(es).

In another example, the container may contain a solid material, from which solid material an odorizing gas and/or a volatile liquid is releasable to odorize the gas(es) that is/are combined with the milk to generate the milk froth.

For example, the solid material can have a porous structure impregnated with the odorizing gas and/or the volatile liquid.

The flavoring may comprise one or more volatile organic compounds.

For instance, the flavoring may comprise one or more essential oils.

A non-limiting example of a flavoring is a propylene glycol-based liquid aroma.

In such an example, the organic compound(s) that odorize the gas(es) is/are mixed with propylene glycol, such that the propylene glycol acts as a base for the flavoring.

The gas(es) that is/are combined with the milk to generate the milk froth can be of any suitable type. Particular mention is made of the gas(es) comprising air. Air is a gas mixture comprising nitrogen and oxygen as main components. Nitrogen can in principle be used by itself, albeit odorized by the flavoring, to generate, when mixed with the milk, the froth.

The milk is also not limited to any particular type, provided that the milk is capable of being frothed. For example, the milk may be at least one of the following: cow's milk, goat's milk, oat milk, soy milk, almond milk, and hemp milk.

The milk froth flavoring device can be implemented in various ways provided that the milk froth flavoring device is capable of odorizing the gas(es) that the milk frother combines with the milk to generate the froth. In some embodiments, the milk froth flavoring device comprises a cartridge, e.g. a pod, such as a disposable pod, containing the flavoring.

In such embodiments, the connection interface can be a portion of the cartridge that interfaces with the milk frother in order to enable the flavoring in the cartridge to odorize the gas(es) that the milk frother mixes with the milk.

The cartridge may, for example, be detachably connectable to the milk frother. Accordingly, the cartridge can be detached after the flavoring has been used up, and the cartridge can be replaced with a fresh cartridge, or refilled with the flavoring. Detachment of the cartridge may alternatively or additionally enable a cartridge to be connected to the milk frother that has a different flavoring compared to that of the cartridge that has been detached.

It is generally noted that the milk froth flavoring device can be supplied separately from the milk frother. In such embodiments, the user can connect the milk froth flavoring device, e.g. cartridge, to a milk frother sourced separately from the milk froth flavoring device or to a milk frother already in the user's possession.

The milk frother can be a standalone frothing device, or can be included in a beverage machine, such as a fully automatic coffee machine.

In some embodiments, the milk froth flavoring device, or the milk frother, comprises an odorizing control system configured to control a degree to which the gas(es) is/are odorized by the flavoring. In this way, the user can control the flavor, including odor, imparted to the milk froth.

The odorizing control system can take any suitable form. In some embodiments, the odorizing control system comprises a valve assembly for controlling delivery of the flavoring, e.g. for controlling release of the flavoring from the container.

According to another aspect, there is provided a milk frothing assembly comprising: a milk frother for mixing milk with gas(es) to generate froth in which bubbles of the gas(es) are suspended in the milk; and the milk froth flavoring device according to any of the embodiments described herein.

The milk frother can have any suitable design provided that the milk frother is capable of combining the milk with gas(es) odorized by the flavoring of the milk froth flavoring device. In at least some embodiments, the milk frother comprises a pressure control system for adjusting pressure to which the milk is exposed, e.g. to which the milk is exposed before, during and/or after frothing.

In some embodiments, the pressure control system is operable to provide an under-pressure to which the milk is exposed.

Such an under-pressure can, for example, draw milk into a mixing region of the milk frother and/or the milk can be exposed to such an under-pressure during agitation of the milk to generate the froth.

In a first set of embodiments, the milk frother comprises a receptacle for receiving the milk and the gas(es), and an agitating system for agitating the milk and the gas(es) received in the receptacle to generate the milk froth.

By agitating the milk in the presence of the gas(es), odorized by the flavoring, in the receptacle, the milk froth can be generated in a relatively robust and straightforward manner.

In such embodiments, the receptacle may be arranged so that the gas(es) is/are provided in a headspace in the receptacle.

The connecting interface of the milk froth flavoring device may, for example, be configured to enable the container to be fluidly connected to the headspace.

The agitating system can have any suitable design. In some embodiments, the agitating system comprises an agitator moveable inside the receptacle to froth the milk. Such an agitator can whisk the milk in the presence of the gas(es), odorized by the flavoring, to generate the froth.

Alternatively or additionally, the agitating system can include a receptacle movement system for moving the receptacle to froth the milk. Such movement, e.g. shaking or vibrating, of the receptacle can agitate the milk, in the presence of the gas(es) odorized by the flavoring, to generate the froth.

In some embodiments, the receptacle may be at least partly delimited by a moveable receptacle wall that includes an integrated turbulence-creating geometry for creating turbulence in the milk received in the receptacle when the receptacle wall is moved.

The milk frother can include a closure assembly for closing, e.g. sealably closing, the receptacle to retain the gas(es) in the headspace.

In some embodiments, the pressure control system is configured to adjust pressure in the receptacle, e.g. in the sealed receptacle. Sealing of the receptacle may facilitate pressure adjustment in the receptacle via the pressure control system.

It has been found that adjusting pressure in the receptacle can provide enhanced control over characteristics of the froth, in particular the nature, e.g. size, of bubbles in the froth.

In a second set of embodiments, the milk frother includes a mixing region in which the milk is mixable with the gas(es), a milk inlet, and a flow path along which steam is deliverable so as to cause the milk to be drawn into the mixing region via the milk inlet. The flow path can include a Venturi restriction, such that flow of steam along the flow path is forced through the Venturi restriction to generate a local pressure drop downstream of the restriction. This pressure drop causes the gases, odorized by the flavoring, to be drawn into, and mixed with, the milk.

The resulting froth may have relatively small bubbles and can be relatively easily poured.

The milk frother may comprise a gas inlet for admitting the gas(es) into the mixing region. The gas(es) combined with the milk in the mixing region can include air.

The connecting interface of the milk froth flavoring device may be configured to enable the container to be fluidly connected to the milk frother via the gas inlet.

In some embodiments, the milk frothing assembly, e.g. the milk froth flavoring device or the milk frother thereof, comprises an adjustable gas inlet for controlling gas ingress into the mixing region.

Accordingly, the adjustable gas inlet can adjust an amount of gas, e.g. an amount of the gas(es) odorized by the flavoring, that is mixed with the milk.

In this way, injection of aroma into the frothing process can be adjusted via adjustment of the adjustable gas inlet.

The design of the milk frother according to the second set of embodiments is not particularly limited. In some embodiments, the milk frother comprises a steam wand for receiving the steam, with the mixing region being provided within the steam wand.

Alternatively, the milk frother may comprise a milk holder detachably couplable to a frame, with the milk holder comprising a first interface portion and the frame comprising a second interface portion. In such embodiments, a channel in which the milk is deliverable towards the mixing region may be formed between the first interface portion and the second interface portion when the milk holder is coupled to the frame.

According to a further aspect, there is provided a method of making milk froth in which bubbles of gas(es) are suspended in milk, the method comprising mixing the milk with the gas(es), wherein the gas(es) in the bubbles suspended in the milk are odorized by a flavoring.

The method can, for example, be implemented using the milk froth flavoring device according to any of the embodiments described herein or using the milk frothing assembly according to any of the embodiments described herein.

In some embodiments, the method comprises receiving the milk in a receptacle; adjusting pressure in the receptacle, with the pressure adjustment comprising including the gas(es), odorized by the flavoring, in the receptacle; and generating the milk froth by agitating the milk in the receptacle in which the pressure is adjusted. These steps can be implemented in any suitable order.

The method may comprise sealing the receptacle so that the pressure is adjusted in the sealed receptacle.

Alternatively or additionally, the generating the froth may comprise using an agitating system to froth the milk.

In some embodiments, adjusting the pressure in the receptacle, e.g. in the sealed receptacle, comprises providing an under-pressure in the receptacle.

In some embodiments, the method comprises releasing the under-pressure following the generating of the froth. Release of the under-pressure may cause densification of the froth already prepared by agitating the milk while the under-pressure is provided in the receptacle, e.g. so as to provide a foam at ambient pressure having smaller bubbles.

In this manner, more pourable foam may be prepared.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a milk frothing assembly according to an example;
FIGs. 2A to 2D schematically depict steps in an exemplary method of frothing milk using the milk frothing assembly shown in FIG. 1;
FIG. 3 schematically depicts a milk frothing assembly according to another example; and
FIG. 4 shows a milk frother according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a milk froth flavoring device, and a related method, for flavoring milk froth. The invention further relates to a milk frothing assembly comprising the milk froth flavoring device and a milk frother. The milk frother is configured to mix gas(es), that is/are odorized by a flavoring included in the milk froth flavoring device, with milk to generate milk froth in which bubbles of the odorized gas(es) are suspended in the milk.

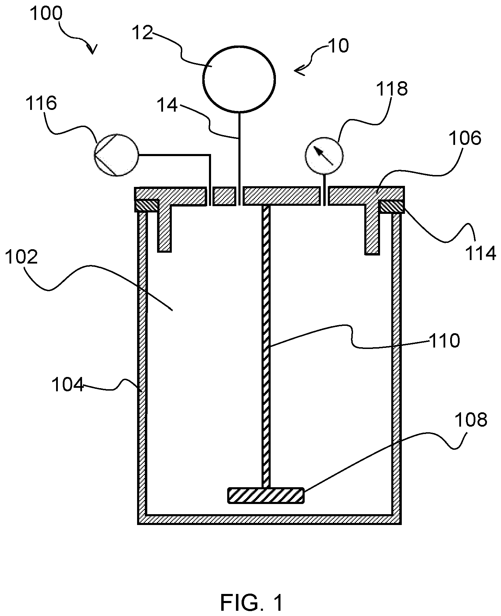

FIG. 1 schematically depicts a milk froth flavoring device 10 according to an example. The milk froth flavoring device 10 comprises a container 12 for containing a flavoring for odorizing gas(es). The milk froth flavoring device 10 also comprises a connection interface 14 for permitting the container 12 to be fluidly connected to a milk frother 100 to enable the flavoring to odorize gas(es) that the milk frother 100 combines with milk to generate milk froth, e.g. pourable and/or scoopable milk froth.

By odorizing the gas(es) combined with the milk in this manner, bubbles in the milk froth can release aroma, e.g. slowly release aroma over time, to enhance the sensory experience of the consumer of the milk froth. About 80% of flavors may be detected by olfactory nerves. Adding a flavoring that odorizes the gas bubbles in order to trigger those nerves can assist to steer the taste of a beverage, e.g. a coffee beverage, comprising the milk froth.

The gas(es) can be of any suitable type. Particular mention is made of the gas(es) comprising air. Air is a gas mixture comprising nitrogen and oxygen as main components. Nitrogen can in principle be used by itself, albeit odorized by the flavoring, to generate, when mixed with the milk, the froth.

The milk froth flavoring device 10 can be implemented in various ways provided that the milk froth flavoring device 10 is capable of odorizing the gas(es) that the milk frother 100 combines with the milk to generate the froth. In some embodiments, the milk froth flavoring device 10 comprises a smoke gun and/or a cartridge, e.g. a pod, such as a disposable pod, containing the flavoring.

In such embodiments, the connection interface 14 can be a portion of the cartridge that interfaces with the milk frother 100 in order to enable the flavoring in the cartridge to odorize the gas(es) that the milk frother 100 combines with the milk.

The cartridge may, for example, be detachably connectable to the milk frother 100. Accordingly, the cartridge can be detached after the flavoring has been used up, and the cartridge can be replaced with a fresh cartridge, or refilled with the flavoring. Detachment of the cartridge may alternatively or additionally enable a cartridge to be connected to the milk frother 100 that has a different flavoring compared to that of the cartridge that has been detached.

It is generally noted that the milk froth flavoring device 10 can be supplied separately from the milk frother 100. In such embodiments, the user can connect the milk froth flavoring device 10 to a milk frother 100 sourced separately from the milk froth flavoring device 10 or to a milk frother 100 already in the user's possession.

In other embodiments, the milk froth flavoring device 10 is supplied to the user together with the milk frother 100. The present disclosure accordingly contemplates a milk frothing assembly 10, 100 comprising the milk froth flavoring device 10 and the milk frother 100.

The milk frother 100 can be a standalone milk frother, or the milk frother 100 can be included in a beverage machine.

Such a beverage machine may, for example, include, in addition to the milk frother 100, a brewing chamber in which water, e.g. hot water, may be combined with a raw material, such as ground coffee.

A non-limiting example of such a beverage machine is a fully automatic coffee machine comprising a coffee grinding stage for grinding coffee, a brewing chamber for receiving ground coffee from the coffee grinding stage, and a hot water supply system for delivering hot water to the brewing chamber.

In such an example, milk froth generated by the milk frother 100 may be manually or automatically dispensed to provide a beverage comprising coffee brewed in the brewing chamber and the milk froth generated by the milk frother 100.

In some embodiments, the milk froth flavoring device 10, or the milk frother 100, comprises an odorizing control system configured to control a degree to which the gas(es) is/are odorized by the flavoring. In this way, the user can control the flavor, including odor, imparted to the milk froth.

The odorizing control system can take any suitable form. In some embodiments, the odorizing control system comprises a valve assembly for controlling delivery of the flavoring, e.g. for controlling release of the flavoring from the container 12.

It is noted at this point that the flavoring can take any suitable form provided that the flavoring is capable of odorizing the gas(es) that is/are combined with the milk to generate the milk froth. In some embodiments, the flavoring is contained in the container 12 in gaseous form. Alternatively, the flavoring may be contained in the container 12 as a liquid, but with the liquid being vaporizable to odorize the gas(es).

The milk frother 100 can have any suitable design provided that the milk frother 100 is capable of combining the milk with gas(es) odorized by the flavoring of the milk froth flavoring device 10. In some embodiments, such as shown in FIG. 1, the milk frother 100 comprises a receptacle 102, e.g. a sealable receptacle 102, for receiving the milk (not visible in FIG. 1).

The receptacle 102 may be delimited by a receptacle wall 104 and a closure assembly 106 that is moveable relative to the chamber wall 104 to enable the receptacle 102 to be opened and closed. When the closure assembly 106 is moved to open the receptacle 102, milk may be received in the receptacle 102 for frothing. By then moving the closure assembly 106 to close the receptacle 102, the receptacle 102 may be closed, e.g. sealingly closed, with the milk inside the receptacle 102.

In some embodiments, such as shown in FIG. 1, the closure assembly 106 is in the form of a lid and the receptacle wall 104 is in the form of a jug that can be closed by the lid. The closure assembly 106, e.g. lid, may be moveable in any suitable manner in order to enable the receptacle 102 to be opened and closed.

In some embodiments, the closure assembly 106, e.g. lid, is detachable from the receptacle wall 104. Alternatively, the closure assembly 106, e.g. lid, may be pivotably mounted to the receptacle wall 104 such that the receptacle 102 may be opened and closed by pivoting of the closure assembly 106.

More generally, the milk frother 100 may comprise an agitating system for agitating the milk and the gas(es) received in the receptacle 102 to generate the milk froth. By agitating the milk in the presence of the gas(es), odorized by the flavoring, in the receptacle 102, the milk froth can be generated in a relatively robust and straightforward manner.

It is noted that the receptacle 102 may be arranged so that the gas(es) is/are provided in a headspace, e.g. in a headspace above the milk, in the receptacle 102.

The connecting interface 14 of the milk froth flavoring device 10 may, for example, be configured to enable the container 12 to be fluidly connected to the headspace.

The agitating system may have any suitable design provided that the agitating system is capable of agitating the milk in the presence of the gas(es) in the receptacle 102 to generate the froth. In some embodiments, such as shown in FIG. 1, the agitating system comprises an agitator 108 moveable inside the receptacle 102 to froth the milk.

The agitator 108 may have any suitable design provided that the agitator's 108 movement is capable of frothing the milk, received in the receptacle 102. The agitator 108 can, for example, whisk the milk in the presence of the gas(es), odorized by the flavoring, to generate the froth.

In at least some embodiments, the milk frother 100 comprises a motor (not visible) for driving movement, e.g. rotation, of the agitator 108. The motor may, for example, be supported by the receptacle wall 104 or the closure assembly 106.

The agitator 108 may be coupled to the motor in any suitable manner. In some embodiments, such as shown in FIG. 1, a spindle 110 may extend from the motor, e.g. mounted in the closure assembly 106, to the agitator 108. Alternatively, the motor and the agitator 108 may be coupled to each other in a contactless manner, e.g. via a magnetic coupling.

In some embodiments, the agitator 108 is rotatable, e.g. by the motor, to create a vortex.

As an alternative or in addition to the agitator 108, the agitating system may include a receptacle movement system for moving the receptacle 102 to froth the milk. Such movement, e.g. vibrating or shaking, of the receptacle 102 can agitate the milk, in the presence of the gas(es) odorized by the flavoring, to generate the froth.

The receptacle movement system may for instance comprise a piezoelectric receptacle movement system.

In some embodiments, the receptacle 102 may be at least partly delimited by a moveable receptacle wall 104 that includes an integrated turbulence-creating geometry for creating turbulence in the milk received in the receptacle 102 when the receptacle wall 104 is moved.

In some embodiments, the milk frother 100 comprises a temperature control system (not visible) for controlling temperature in the receptacle 102 during frothing. The temperature control system may, for example, be configured to heat the receptacle 102. By heating the receptacle 102, the milk may be warmed at the same time as, prior to, or even after being frothed. Milk that is both frothed and warm may be desirable to include, for example, in a coffee beverage, such as a latte, cappuccino, flat white, and so on.

In order to provide heating, the temperature control system may include a heating element, such as a resistive or inductive heating element, for heating the receptacle 102. Other types of element for controlling the temperature of the receptacle 102 can also be contemplated, such as a Peltier element. It is noted that such a Peltier element may provide cooling, e.g. as well as heating, to the receptacle 102.

In some embodiments, and still referring to FIG. 1, the milk frother 100 comprises a pressure control system for adjusting pressure in the receptacle 102, e.g. in the sealed receptacle 102. Sealing of the receptacle 102 may facilitate pressure adjustment in the receptacle 102 via the pressure control system.

It has been found that adjusting pressure in the receptacle 102 can provide enhanced control over characteristics of the froth, in particular the nature, e.g. size, of bubbles in the froth. This enhanced control over characteristics of the froth is explained in more detail herein below with reference to various non-limiting illustrative examples.

In some embodiments, the pressure control system is configured to enable user-selection of different pressures in the receptacle 102. By permitting the user to select the pressure in the receptacle 102, the user may be provided with enhanced control over the characteristics of the milk froth. In this way, the user may be enabled to, for example, select the characteristics of the froth, according to the type of beverage they wish to make, for example latte, cappuccino, flat white, and so on.

It is noted at this point that the receptacle 102 can be sealed in any suitable manner in order to facilitate pressure adjustment in the receptacle 102. In some embodiments, such as shown in FIG. 1, a sealing member 114 is interposed between the receptacle wall 104 and the closure assembly 106 to seal the receptacle 102 when the closure assembly 106 is positioned to close the receptacle 102.

The sealing member 114 can be of any suitable type. For example, the sealing member 114 may include one or more O-rings, flat gasket(s), etc.

The pressure control system may include a pump 116, such as a vacuum pump 116, to adjust the pressure in the receptacle 102. Such a pump 116, e.g. vacuum pump 116, may be operable to provide an under-pressure in the receptacle 102. The term "under-pressure" is intended to refer to a partial vacuum, e.g. in the receptacle 102, for instance in the headspace above the milk received in the receptacle 102.

In such embodiments, the characteristics of the milk froth may be controllable by operating the agitating system, e.g. by moving the agitator 108, while the under-pressure is provided in the sealed receptacle 102 to provide froth, with subsequent release of the under-pressure causing densification of the froth, e.g. so as to provide a foam at ambient pressure having smaller bubbles.

The agitating system may be operable, e.g. by the agitator 108 being moveable inside the receptacle 102, at least when the receptacle 102 is closed, e.g. sealingly closed. In this manner, the agitating system may froth the milk received in the closed receptacle 102 while the pressure is adjusted via the pressure control system.

In some embodiments, the milk frother 100 comprises an under-pressure release system controllable to release the under-pressure, e.g. following operation of the agitating system while the under-pressure is provided in the receptacle 102. The under-pressure release system may, for example, include a valve that is controllable to introduce gas, e.g. ambient air, into the receptacle 102. Such a gas may, for example, be odorized by the flavoring.

Alternatively or additionally, the under-pressure release system may include a control system configured to control the pump 116 to pump gas, e.g. the odorized gas, into the receptacle 102. This may be achievable by, for example, the control system reversing polarity of an electrical motor that drives the pump 116.

As well as causing densification of the froth, this under-pressure release may facilitate opening of the receptacle 102 to access the froth, for example by moving the closure assembly 106 relative to the receptacle wall 104.

The pressure control system, e.g. the pump 116, may be operable to provide a pressure in the receptacle 102 that is less than 1 bar absolute, preferably between 0.01 and 0.95 bar absolute, more preferably between 0.1 and 0.8 bar absolute, and most preferably between 0.1 and 0.5 bar absolute. Enhanced control over characteristics of, e.g. bubble size in, the froth has been found by employing such pressures in the receptacle 102.

The pressure control system may be configured in any suitable manner, for instance by comprising a pump 116, e.g. vacuum pump 116, in order to enable adjustment of the pressure in the receptacle 102. In some embodiments, the pressure control system comprises an expandable container in fluid communication with the receptacle 102, with expansion of the container causing reduction of pressure in the receptacle 102. This may provide a relatively straightforward way of adjusting the pressure in the receptacle 102. Moreover, the under-pressure in the sealed receptacle 102 may be user-selectable by controlling a degree of expansion of the container.

The expandable container may, for example, be defined by a tube, e.g. a syringe barrel, and a plunger that is moveable along the tube.

The pressure control system may further comprise a valve assembly, e.g. comprising a pair of check valves, to enable expansion of the container to be adjusted in order to enable selection of the under-pressure in the sealed receptacle 102, e.g. by moving the plunger along the tube.

This may provide a relatively straightforwardly implementable way of configuring the pressure control system to enable user-selection of different pressures in the receptacle 102.

In some embodiments, the pressure control system comprises a pressure measurement device 118 for indicating pressure in the receptacle 102, e.g. in the sealed receptacle 102. The pressure measurement device 118 may provide an indication of characteristics of the milk froth, e.g. foam, being prepared by the milk frother 100. For example, the output of the pressure measurement device 118 may provide an indicator of foam structure. This may be due to the pressure measurement device 118 indicating a difference in pressure between the inside of the receptacle 102 and the atmosphere in which the milk frother 100 is being used, which difference in pressure may determine the nature, e.g. size, of the bubbles in the froth provided following release of the pressure.

Alternatively or additionally, the output provided by the pressure measurement device 118 may be used as a basis on which to adjust the pressure, e.g. under-pressure, provided in the receptacle 102.

Any suitable type of pressure measurement device 118 may be employed for this purpose. In some embodiments, the pressure measurement device 118 comprises a manometer.

In some embodiments, the adjustment of the pressure, e.g. under-pressure, in the receptacle 102 may be manual, by the output of the pressure measurement device 118, e.g. manometer, being communicated to the user, and the user manually adjusting the pressure control system, e.g. the expansion of the container, based on the output.

Alternatively or additionally, the pressure control system may be configured to receive the output of the pressure measurement device 118, e.g. manometer, and automatically adjust the pressure control system, for example the expansion of the container, e.g. via control over a motorized syringe pump, based on the output.

In some embodiments, such as shown in FIG. 1, the pressure control system, e.g. including the pump 116 and the pressure measurement device 118, is mounted at the closure assembly 106, e.g. lid.

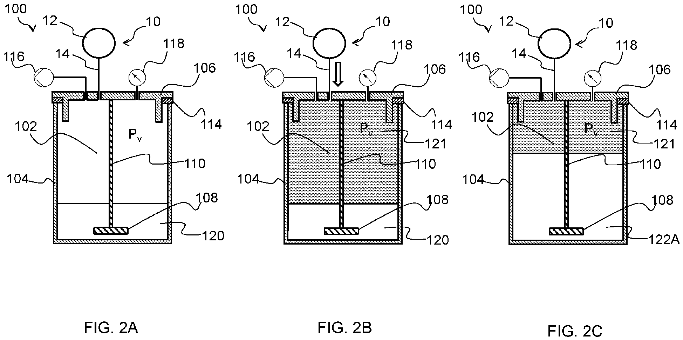

FIGs. 2A to 2D schematically depict a method of frothing milk 120 according to a non-limiting example. The method may utilize the milk frother 100 shown in FIG. 1. In FIG. 2A, milk 120 is shown received in the sealed receptacle 102, which in this case is sealed via the sealing member 114, e.g. O-ring(s), flat gasket(s) etc., between the receptacle wall 104 and the closure assembly 106.

In an initial step, the pressure is adjusted, which in this example involves using a vacuum pump 116 included in the pressure control system to partially evacuate the sealed receptacle 102 and thereby provide an under-pressure in the sealed receptacle 102. This may involve reduction of the pressure, Pᵥ, in the headspace above the milk 120 from atmospheric pressure, e.g. about 1 bar, to a pressure in the range of 0.1 to 0.8 bar, e.g. about 0.5 bar.

Referring to FIG. 2B, gas(es) 121, e.g. air, odorized by the flavoring provided by the milk froth flavoring device 10, for example by the smoke gun or cartridge, e.g. pod, can be introduced into the receptacle 102. Thus, the gas, e.g. air, initially present inside the receptacle 102 can be partially replaced by the odorized gas(es) 121.

In this step, the pressure in the receptacle 102 can increase, for example from about 0.5 bar to about 0.6 bar. Hence an under-pressure can be provided in the receptacle 102, as well as the receptacle 102 containing (residual) gas(es) present therein being odorized by the flavoring.

Referring to FIG. 2C, the agitator 108 may be moved, e.g. rotated by the motor, to produce froth 122A, e.g. in the form of relatively coarse foam having larger bubbles, while the under-pressure, e.g. a pressure of about 0.6 bar, is being provided together with the odorized gas(es) in the sealed receptacle 102. As schematically shown in FIG. 2C, agitation of the milk 120 may cause aeration of the milk 120 so that the froth 122A occupies a greater volume than the milk 120 prior to agitation.

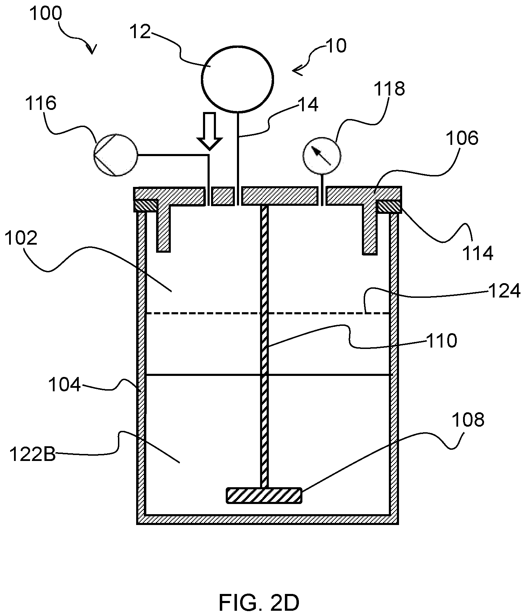

After the agitation, the pressure, in this case the under-pressure, provided in the receptacle 102 may be released, in this example by the receptacle 102 being returned to ambient/atmospheric pressure. In other words, the pressure in the receptacle 102 may increase from about 0.6 bar back to about 1 bar. This is schematically illustrated in FIG. 2D.

This pressure change may cause bubbles in the froth 122B, e.g. milk emulsion, to shrink. The dotted line 124 in FIG. 2D indicates the volume of the froth 122A prior to shrinkage. The final froth 122B, e.g. in the form of relatively fine foam having smaller bubbles of odorized gas(es), can then be used. For instance, the final froth 122B may be removed from the receptacle 102 and included in a beverage, e.g. a coffee beverage.

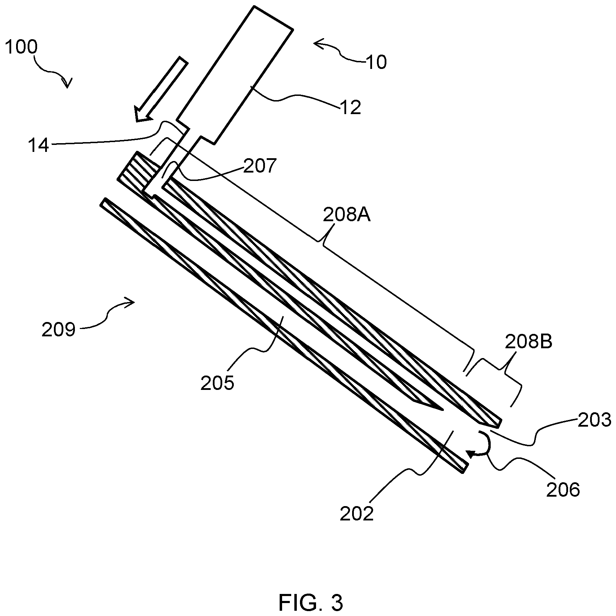

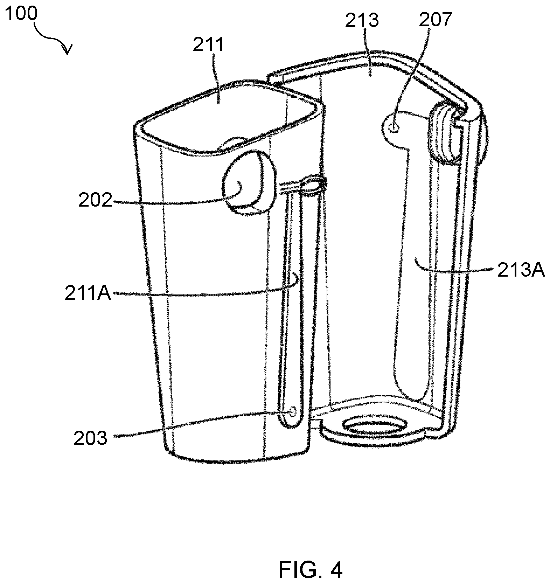

In other embodiments, and referring now to FIGs. 3 and 4, the milk frother 100 includes a mixing region 202 in which the milk is mixable with the gas(es), a milk inlet 203, and a flow path 205 along which steam is deliverable so as to cause the milk to be drawn into the mixing region 202 via the milk inlet 203. The mixing of the gas(es) with the milk in the mixing region 202 is denoted in FIG. 3 by the arrow 206.

The steam can, for example, be provided by a steam supply of a beverage machine in which the milk frother 100 is included, or to which the flow path 205 of the milk frother 100 is fluidly connectable.

The flow path 205 can include a Venturi restriction, such that flow of steam along the flow path 205 is forced through the Venturi restriction to generate a local pressure drop, in other words an under-pressure, downstream of the restriction. This pressure drop causes the gases, odorized by the flavoring, to be drawn into, and mixed with, the milk. The resulting froth may have relatively small bubbles and can be relatively easily poured.

FIG. 3 shows passage 208A of the mixture of the flavoring, e.g. aroma, and the gas(es), e.g. air. FIG. 3 further shows a region 208B along the flow path 205 at which steam expansion takes place.

In such embodiments, the milk frother 100 may comprise a gas inlet 207 for admitting the gas(es) into the mixing region 202. The gas(es) combined with the milk in the mixing region 202 can include air.

The connecting interface 14 of the milk froth flavoring device 10 may be configured to enable the container 12 to be fluidly connected to the milk frother 100 via the gas inlet 207.

The design of the milk frother 100 according to such embodiments is not particularly limited. For example, and still referring to FIG. 3, the milk frother 100 comprises a steam wand 209 for receiving the steam, with the mixing region 202 being provided within the steam wand 209.

Alternatively, and referring to FIG. 4, the milk frother 100 may comprise a milk holder 211 for holding the milk. The milk holder 211 may be detachably couplable to a frame 213.

The milk holder 211 may comprise a first interface portion 211A, with the frame 213 comprising a second interface portion 213A. In such embodiments, a channel for delivering the milk, received via the milk inlet 203, to the mixing region 202 may be formed between the first interface portion 211A and the second interface portion 213A when the milk holder 211 is coupled to the frame 213.

In some embodiments, the milk frothing assembly 10, 100, e.g. the milk froth flavoring device 10 or the milk frother 100 thereof, comprises an adjustable gas inlet 207 for controlling gas ingress into the mixing region 202.

Accordingly, the adjustable gas inlet 207 can adjust an amount of gas, e.g. an amount of the gas(es) odorized by the flavoring, that is mixed with the milk.

In this way, injection of aroma into the frothing process can be adjusted via adjustment of the adjustable gas inlet 207.

The adjustable gas inlet 207 can take any suitable form. In some embodiments, the adjustable gas inlet 207 comprises a valve, e.g. a valve controllable by a lever, such as a butterfly valve, to control ingress of the gas(es) odorized by the flavoring into the mixing region 202.

The present disclosure further provides a method of making milk froth, with the method comprising mixing milk with gas(es), which gas(es) are odorized by a flavoring.

The method can, for example, be implemented using the milk froth flavoring device 10 according to any of the embodiments described herein or using the milk frothing assembly 10, 100 according to any of the embodiments described herein.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A milk froth flavoring device (10) for connecting to a milk frother (100), the milk frother being for mixing gas(es) with milk to generate froth in which bubbles of the gas(es) are suspended in the milk, wherein the milk froth flavoring device comprises:
a flavoring for odorizing the gas(es);
a container (12) for containing the flavoring; and
a connection interface (14) for permitting the container to be fluidly connected to the milk frother to enable the flavoring to odorize the gas(es) in the bubbles suspended in the milk.

2. The milk froth flavoring device (10) according to claim 1, comprising an odorizing control system configured to control a degree to which the gas(es) is/are odorized by the flavoring.

3. The milk froth flavoring device (10) according to claim 2, wherein the odorizing control system comprises a valve assembly for controlling delivery of the flavoring.

4. The milk froth flavoring device (10) according to any one of claims 1 to 3, comprising a cartridge containing the flavoring.

5. A milk frothing assembly (10, 100) comprising:
a milk frother (100) for mixing milk with gas(es) to generate froth in which bubbles of the gas(es) are suspended in the milk; and
the milk froth flavoring device (10) according to any one of claims 1 to 4.

6. The milk frothing assembly (10, 100) according to claim 5, wherein the milk frother (100) comprises a pressure control system for adjusting pressure to which the milk is exposed; optionally wherein the pressure control system is operable to provide an under-pressure to which the milk is exposed.

7. The milk frothing assembly (10, 100) according to claim 5 or claim 6, wherein the milk frother (100) comprises a receptacle (102) for receiving the milk and the gas(es), and an agitating system for agitating the milk and the gas(es) received in the receptacle to generate the milk froth.

8. The milk frothing assembly (10, 100) according to claim 7, wherein the agitating system comprises:
an agitator (108) moveable inside the receptacle (102) to froth the milk; and/or
a receptacle movement system for moving the receptacle to froth the milk.

9. The milk frothing assembly (10, 100) according to claim 7 or claim 8, wherein the receptacle (102) is arranged so that the gas(es) is/are provided in a headspace in the receptacle, the connecting interface (14) being configured to enable the container (12) to be fluidly connected to the headspace.

10. The milk frothing assembly (10, 100) according to claim 5 or claim 6, wherein the milk frother (100) includes a mixing region (202) in which the milk is mixable with the gas(es), a milk inlet (203), and a flow path (205) along which steam is deliverable so as to cause the milk to be drawn into the mixing region via the milk inlet.

11. The milk frothing assembly (10, 100) according to claim 10, wherein the milk frother (100) comprises a gas inlet (207) for admitting the gas(es) into the mixing region (202), wherein the connecting interface (14) is configured to enable the container to be fluidly connected to the milk frother via the gas inlet.

12. The milk frothing assembly (10, 100) according to claim 10 or claim 11, comprising an adjustable gas inlet (207) for controlling gas ingress into the mixing region (202).

13. The milk frothing assembly (10, 100) according to any one of claims 10 to 12, wherein the milk frother (100) comprises a steam wand (209) for receiving the steam, the mixing region (202) being provided within the steam wand.

14. The milk frothing assembly (10, 100) according to any one of claims 10 to 12, wherein the milk frother (100) comprises a milk holder (211) detachably couplable to a frame (213), the milk holder comprising a first interface portion (211A) and the frame comprising a second interface portion (213A), a channel in which the milk is deliverable towards the mixing region (202) being formed between the first interface portion and the second interface portion when the milk holder is coupled to the frame.

15. A method of making milk froth in which bubbles of gas(es) are suspended in milk, the method comprising mixing the milk with the gas(es), wherein the gas(es) in the bubbles suspended in the milk are odorized by a flavoring.
